# EUROPEAN PATENT APPLICATION

(11) **EP 3 616 801 A1**
(43) Date of publication of application: **04.03.2020**
(21) Application number: 18806343.2
(22) Date of filing: 01.03.2018
(51) Int. Cl.: B06B 1/04, H02K 33/16, H02K 33/18

(54) **RECIPROCATING APPARATUS**

(30) Priority: 25.05.2017 JP 2017103160
(71) Applicant: SPFX Studio Co., Ltd, Fukuoka-shi, Fukuoka 812-0042 (JP)
(72) Inventor: KOGA Nobuaki, Fukuoka-shi Fukuoka 812-0042 (JP)
(74) Representative: Isarpatent
(86) International application number: PCT/JP2018/007911
(87) International publication number: WO 2018/216301

(57) **Abstract**

To provide a reciprocating apparatus that is capable of generating large energy vibration even with a compact configuration.

A reciprocating apparatus 10 is provided with: a permanent magnet 20; and an electromagnetic yoke part 30a, the magnetic pole surfaces of both ends of which are disposed opposite to and without being in contact with one of magnetic pole surfaces of the permanent magnet 20, and which forms a magnetic circuit by means of an electromagnetic yoke 34 and as least one coil 32 having a magnetic body core 35, wherein one of the permanent magnet 20 and the electromagnetic yoke part 30a is a mover while the other is a stator, the size Tm of one magnetic pole surface 202 of the permanent magnet 20, as the mover, in a moving direction is equal to or larger than the size Ty, in the moving direction, of two magnetic pole surfaces 343a, 343b including a gap held between the two opposing magnetic pole surfaces of the electromagnetic yoke 34.

## Description

### Technical Field

The present invention relates to a reciprocating apparatus.

### Background Art

The major methods used for reciprocating apparatuses that utilize electromagnetism are largely of four types, those employing a structure similar to that of a common speaker, with a permanent magnet and a voice coil lacking a core in the coil, as disclosed in Patent Document 1, those in which a mover hanging with an elastic solid is moved in a structure similar to a solenoid, as disclosed in Patent Document 2, those in which an eccentric weight is rotated to cause oscillation, as disclosed in Patent Document 3, and those in which oscillation is produced with a structure combining an electromagnetic yoke and a permanent magnet such as often seen in brushless DC motors, as disclosed in Patent Document 4.

### Citation List

### Patent Documents

Patent Document 1: Japanese Published Unexamined Patent Application No. 2004-282680
Patent Document 2: Japanese Published Unexamined Patent Application No. 2013-56309
Patent Document 3: Japanese Published Unexamined Patent Application No. 2012-175715
Patent Document 4: Japanese Published Unexamined Patent Application No. 2010-179295

### Summary of Invention

### Technical Problem

The voice coil system of Patent Document 1 has been difficult to downsize when high output is a goal.

The solenoid system of Patent Document 2 vibrates by hanging of a mover by an elastic solid, and in structural terms, thrust is lowest at the neutral position where vibrational motion begins and deceleration is required for turning back, but since in actuality the thrust is greatest near the respective terminal ends of the approach and return paths (the turning points), this system is disadvantageous from the standpoint of initial oscillation responsiveness.

The system of rotating an eccentric weight described in Patent Document 3 is suited for oscillation at the same amplitude at a fixed interval, but it is not suited for vibration whose amplitude or rhythm constantly changes, similar to music.

The combination of an electromagnetic yoke and permanent magnet in Patent Document 4 is driven by electromagnetic force, unlike a voice coil system that is driven by Lorentz force, and it therefore more easily allows downsizing and large thrust generation, but if the magnetic pole surface at the gap between the two electromagnetic yokes and the two electromagnetic yokes forming it is larger than the magnetic pole surface of the permanent magnet, then the permanent magnet becomes biased and drawn to one of the two electromagnetic yoke poles . A high oscillation effect cannot be expected with driving in this state. While this problem can be avoided if the gap between the mover and stator is increased and the mover is pressed with an elastic solid such as a spring so that the mover is at the neutral position with respect to the stator, such increasing of the gap between the mover and the stator makes it impossible to utilize the strong magnetic field near the magnetic pole surface of the permanent magnet, while in addition, when an elastic solid is used, the oscillator will fail to move unless the force of the elastic solid is exceeded, or even if it does move the elastic solid constantly presents resistance that inhibits oscillation, and as a result the efficiency of oscillation with respect to the driving current is significantly impaired.

In order to obtain high-energy oscillation it is necessary to implement a configuration/structure having a large oscillator mass, with instantaneous power that can overcome the mass, and having large thrust and low resistance inhibiting the thrust.

Voice coils, which are employed in conventional speakers and numerous types of reciprocating apparatuses, lack a core in the coil and are therefore lightweight, and thus have low inertia and good high frequency response characteristics, but on the other hand Lorentz force power is lower than electromagnetic force (nodal force or surface force) produced between a core coil and a magnet, such that a certain minimal size is required to obtain high-energy oscillation, making them difficult to downsize.

If the structure is such that, instead of a voice coil, coils with a magnetic core and yoke are combined with a permanent magnet, with two electromagnetic yoke poles facing across a gap for one magnetic pole of the single permanent magnet, then it is possible to produce relatively large thrust, but if the gap between the permanent magnet and the electromagnetic yokes is narrow and the magnetic pole surface of the permanent magnet is smaller, then one of the two electromagnetic yoke poles near the magnetic pole surface of the permanent magnet will be drawn in a biased manner.

The distances of the two electromagnetic yoke magnetic pole surfaces from one magnetic pole surface of the single permanent magnet in the originally ideal position are by no means equal and neutral positions when electricity is not flowing, and in this distorted position it is never possible to obtain sufficient oscillation that corresponds to the driving current.

It is an object of the present invention to provide a reciprocating apparatus that is capable of generating high-energy oscillation even with a small size.

### Solution to Problem

The reciprocating apparatus of the first invention for achieving the purpose stated above has a permanent magnet, and an electromagnetic yoke part, the two magnetic pole surfaces of which are disposed facing each other without being in contact with at least one of the magnetic pole surfaces of the permanent magnet, and which forms a magnetic circuit by means of an electromagnetic yoke together with one or more coils having a magnetic core, wherein either of the permanent magnet and the electromagnetic yoke part is a mover while the other is a stator, and the dimension Tm of the one magnetic pole surface of the permanent magnet in the moving direction of the mover is equal to or greater than the dimension Ty of the two magnetic pole surfaces that include the gap sandwiched between the opposing two magnetic pole surfaces of the electromagnetic yoke part, in the moving direction.

The reciprocating apparatus of the first invention preferably further comprises a pair of magnetic bodies sandwiching the permanent magnet in a direction Y, the direction Y which is perpendicular to the magnetic pole direction of the permanent magnet being the thickness direction, with the electromagnetic yoke part disposed between the pair of magnetic bodies.

The reciprocating apparatus of the second invention for achieving the purpose stated above is a reciprocating apparatus comprising a permanent magnet part with a yoke forming a magnetic circuit together with a permanent magnet, and an electromagnetic yoke part, the two magnetic pole surfaces of which are disposed facing each other without being in contact with at least one of the magnetic pole surfaces of the permanent magnet part, and which forms a magnetic circuit by means of an electromagnetic yoke together with one or more coils having a magnetic core, wherein either of the permanent magnet part and the electromagnetic yoke part is a mover while the other is a stator, and the dimension Tmy of the one magnetic pole surface of the permanent magnet part in the moving direction is equal to or greater than the dimension Ty of the two magnetic pole surfaces that include the gap sandwiched between the opposing two magnetic pole surfaces of the electromagnetic yoke part, in the moving direction, and it further comprises a pair of magnetic bodies sandwiching the permanent magnet part in a direction Y, the direction Y which is perpendicular to the magnetic pole direction of the permanent magnet part being the thickness direction, with the electromagnetic yoke part disposed between the pair of magnetic bodies.

The reciprocating apparatus of the second invention preferably further comprises a pair of magnetic bodies sandwiching the permanent magnet part in a direction Y, the direction Y which is perpendicular to the magnetic pole direction of the permanent magnet part being the thickness direction,
with the electromagnetic yoke part disposed between the pair of magnetic bodies.

In the reciprocating apparatus of the first or second invention,
the mover may undergo rotational reciprocal movement around a rotation axis extending in the direction perpendicular to the magnetic pole direction produced by the permanent magnet and the direction Y.

The reciprocating apparatus of the third invention for achieving the purpose stated above comprises a permanent magnet part with a yoke forming a magnetic circuit together with a permanent magnet, and an electromagnetic yoke part disposed on the side opposite the permanent magnet, sandwiching the yoke, and forming a magnetic circuit by means of an electromagnetic yoke, together with one or more coils having a magnetic core, the two magnetic pole surfaces of the electromagnetic yoke part being disposed facing each other without being in contact with the magnetic pole surface of the yoke, wherein either of the permanent magnet part and the electromagnetic yoke part is a mover while the other is a stator, and the dimension Tmy of the one magnetic pole surface of the permanent magnet part in the moving direction is equal to or greater than the dimension Ty of the two magnetic pole surfaces that include the gap sandwiched between the opposing two magnetic pole surfaces of the electromagnetic yoke part, in the moving direction.

### Advantageous Effects of Invention

According to the present invention, it is possible to provide a reciprocating apparatus that is capable of generating high-energy oscillation even with a small size.

### Brief Description of Drawings

Fig. 1(A) and (B) are, respectively, an external view of a reciprocating apparatus according to a first embodiment of the present invention, also showing the thrust produced by nodal force, and a cross-sectional view showing a cross-section cut on a plane perpendicular to the Z-axis.
Fig. 2(A) and (B) are, respectively, an external view of a modified example of the reciprocating apparatus according to the first embodiment of the present invention, also showing the thrust produced by nodal force, and a cross-sectional view showing a cross-section cut on a plane perpendicular to the Z-axis.
Fig. 3(A) to (H) are diagrams illustrating a conventional reciprocating apparatus.
Fig. 4(A) and (B) are basic stylized illustrations showing a reciprocating apparatus according to the first embodiment of the present invention, and a modified example thereof.
Fig. 5 is a graph showing the relationship between the gap and nodal force in the reciprocating apparatus according to the first embodiment of the present invention.
Fig. 6(A) to (D) are cross-sectional views showing a modified example of the respective reciprocating apparatuses according to the first embodiment of the present invention.
Fig. 7(A) to (D) are cross-sectional views showing a modified example of the respective reciprocating apparatuses according to the first embodiment of the present invention.
Fig. 8(A) and (B) are, respectively, an illustration showing a reciprocating apparatus according to the first embodiment and an illustration showing the flux lines generated by a permanent magnet in a reciprocating apparatus according to a second embodiment.
Fig. 9 is a graph showing the change in applied current and nodal force in the Y-direction produced by the mover, for the reciprocating apparatus according to the first embodiment of the present invention with and without a 1.6 mm-thick SS400 steel magnetic body sandwiching it.
Fig. 10 is a graph showing the change in distance from the neutral position of the mover and nodal force in the Y-direction produced by the mover, for the reciprocating apparatus according to the first embodiment of the present invention with and without a 1.6 mm-thick SS400 steel magnetic body sandwiching it, with a direct constant current of 200 mA applied to the reciprocating apparatus.
Fig. 11(A), (B) and (C) are lateral cross-sectional views of, respectively, a reciprocating apparatus according to the first embodiment, a reciprocating apparatus according to the second embodiment and a modified example of the reciprocating apparatus according to the second embodiment.
Fig. 12(A), (B) and (C) are lateral cross-sectional views of, respectively, a modified example of a reciprocating apparatus according to the first embodiment, a reciprocating apparatus according to a third embodiment and a modified example of the reciprocating apparatus according to the third embodiment.

### Description of Embodiments

To provide better understanding of the present invention, concrete embodiments of the present invention will now be described with reference to the accompanying drawings. Parts not referred to in the description may not be depicted in the drawings.

### [First embodiment]

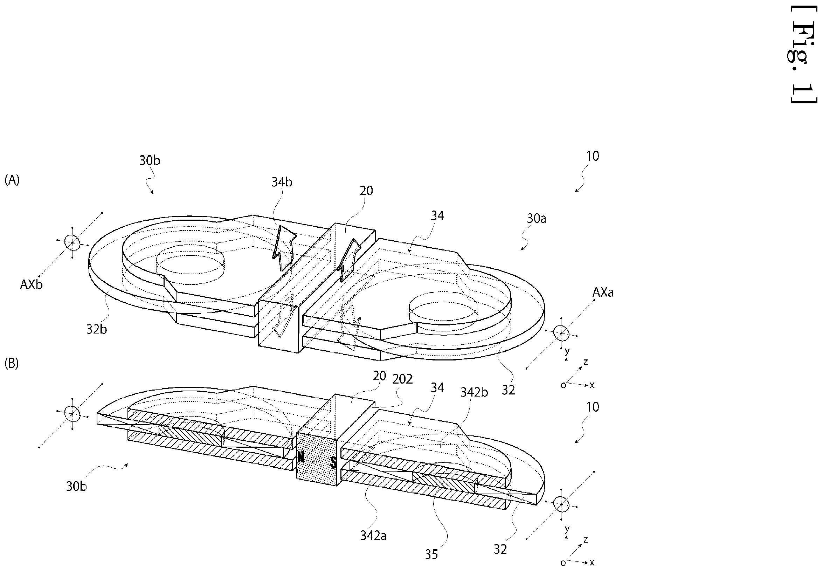

As shown in Fig. 1(A) and (B), the reciprocating apparatus 10 of the first embodiment of the present invention comprises a permanent magnet (an example of a permanent magnet part) 20 and electromagnetic yoke parts 30a, 30b, wherein application of an alternating current to coils 32 is able to produce reciprocal movement, generating oscillation. The permanent magnet 20 and the electromagnetic yoke parts 30a, 30b are housed in a case (not shown).

In Fig. 1(A) , the coordinate system O is an orthogonal coordinate system comprising an X-axis, Y-axis and Z-axis which are mutually perpendicular. However, the coordinate system O does not need to be an exactly orthogonal coordinate system.

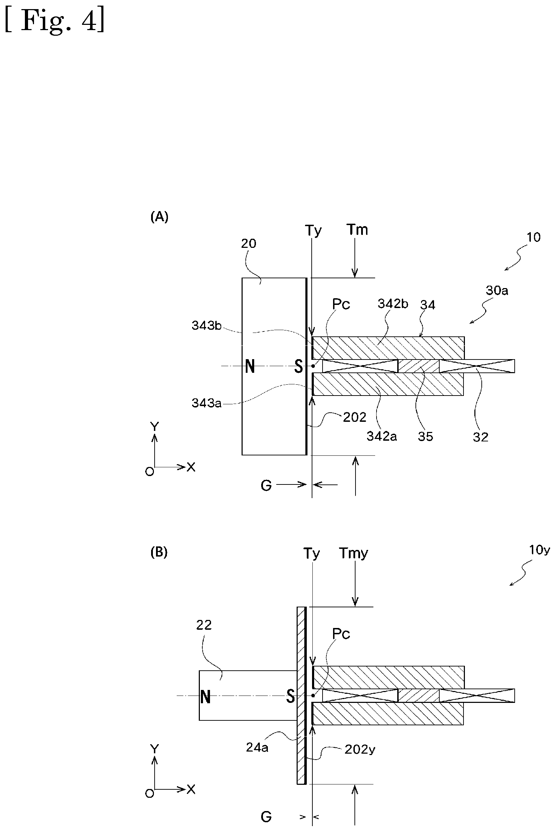

The permanent magnet 20 has magnetic poles with the X-axial direction as the magnetic pole direction, and as shown in Fig. 4 (A), the thickness in the Y-axial direction is the dimension Tm. The dimension Tm (thickness Tm) may be 10 mm, for example. The permanent magnet 20 has performance similar to a NEOMAX-42 (NEOMAX: registered trademark) neodymium magnet by Hitachi Metals, Ltd., for example.

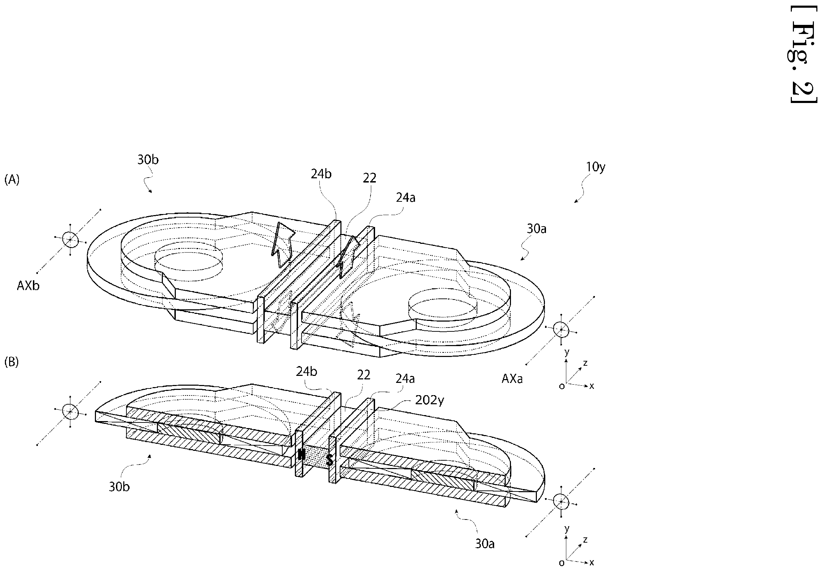

The reciprocating apparatus 10 may also be a reciprocating apparatus 10y comprising, instead of the permanent magnet 20, a permanent magnet 22 and yokes 24a, 24b provided on both magnetic pole surfaces of the permanent magnet 22 and forming a magnetic circuit, as shown in Fig. 2(A), (B) and Fig. 4(B).

As shown in Fig. 1(B), the electromagnetic yoke part 30a forms a magnetic circuit by means of an electromagnetic yoke together with one or more coils 32 with a magnetic core 35, and it is flat in the Y-axial direction. The electromagnetic yoke part 30a is capable of reciprocal movement relative to the permanent magnet 20, with the neutral position Pc (see Fig. 4(A)) as the center. More specifically, the electromagnetic yoke part 30a undergoes rotational reciprocal movement around a rotation axis AXa extending in the Z-axial direction, as indicated by the arrow in Fig. 1(A).

The neutral position Pc is a position where one pole surface 202 of the permanent magnet and two magnetic pole surfaces 343a, 343b of the electromagnetic yoke part 30a are facing across a gap G (see Fig. 4(A)), and where the electromagnetic yoke part 30a is at a position such that a plane that magnetically divides the electromagnetic yoke part 30a into two equal parts, perpendicular to the moving direction of the electromagnetic yoke part 30a, matches a straight line of a magnetic line of force extending from the center of the magnetic pole surface of one permanent magnet part to an infinite distance, being also the position where the electromagnetic yoke 34 is drawn to the permanent magnet 20 and is stationary in the absence of electric power applied to the coil 32.

As shown in Fig. 1(B), the coil 32 is coiled around the magnetic core 35, and is flat in the Y-axial direction as the axial direction of the magnetic core 35. A driving controller (not shown) that applies alternating current for driving of the coil 32 is connected to the coil 32.

The electromagnetic yoke 34 forms a magnetic circuit together with the coil 32. In the neutral position Pc, the electromagnetic yoke 34 has its end face opposing one magnetic pole surface 202 of the permanent magnet 20 (see Fig. 4(A)).

More specifically, the electromagnetic yoke 34 has a first electromagnetic yoke 342a, and a second electromagnetic yoke 342b disposed across an interval from the first electromagnetic yoke 342a in the Y-axial direction (direction Y) that is perpendicular to the X-axial direction. The first electromagnetic yoke 342a and the second electromagnetic yoke 342b may each be 1. 6 mm-thick SS400 steel, for example.

The first electromagnetic yoke 342a is in the form of a plate, contacting the coil 32 so as to cover part of one side of the coil 32.

The second electromagnetic yoke 342b is also in the form of a plate, and is disposed on the opposite side from the first electromagnetic yoke 342a, sandwiching the coil 32. The second electromagnetic yoke 342b is symmetrical with the first electromagnetic yoke 342a sandwiching the coil 32, and it contacts the coil 32 in a manner covering part of the other side of the coil 32.

As shown in Fig. 4(A), the dimension Ty between both end faces of the electromagnetic yoke 34 in the Y-axial direction or the moving direction of the mover, which includes the two magnetic pole surfaces 343a, 343b of the first electromagnetic yoke 342a and second electromagnetic yoke 342b that are facing the one magnetic pole surface 202 of the permanent magnet 20, and also the gap between them (this will also be referred to hereunder as the "thickness Ty") is no greater than the thickness Tm in the Y-axial direction of the permanent magnet 20. With the construction shown in Fig. 4(A), the dimension Ty is the total of the thicknesses of the first electromagnetic yoke 342a, the coil 32 and the second electromagnetic yoke 342b in the Y-axial direction, which may be 4.8 mm, for example.

As shown in Fig. 1(A), the electromagnetic yoke part 30b is disposed on the side opposite the electromagnetic yoke part 30a, sandwiching the permanent magnet 20, and it moves (or revolves) around the rotation axis AXb that extends in the Z-axial direction, as indicated by the arrow. The electromagnetic yoke part 30b has essentially the same construction as the electromagnetic yoke part 30a.

The reciprocating apparatus does not necessarily need to comprise the electromagnetic yoke part 30b. In other words, it is sufficient if the reciprocating apparatus comprises at least one of the electromagnetic yoke parts 30a, 30b.

The electromagnetic yoke part 30b will therefore not be described in detail, and the following description will regard only the electromagnetic yoke part 30a.

When the coil 32 is in a state without conduction of electricity, the electromagnetic yoke part 30a is positioned against the center section of one magnetic pole surface 202 in the thickness direction, or in other words, it is stably stationary at the neutral position Pc. When the electromagnetic yoke part 30a is at this neutral position Pc, and the driving controller (not shown) applies current to the coil 32, the first electromagnetic yoke 342a and second electromagnetic yoke 342b act as the N-pole and S-pole, respectively, and the stable stationary state of the electromagnetic yoke part 30a is disrupted. As a result, when attraction force is produced in the first electromagnetic yoke 342a acting toward the magnetic pole surface 202, repulsive force is produced in the second electromagnetic yoke 342b and large nodal force is produced in the electromagnetic yoke part 30a as a whole, causing movement of the electromagnetic yoke part 30a.

Incidentally, when the first electromagnetic yoke 342a and second electromagnetic yoke 342b have the same polarity and a current is applied to the coil 32, causing movement of the electromagnetic yoke part 30a, nodal force is immediately produced in the opposite direction, and force acting to pull back the electromagnetic yoke part 30a in the direction of the neutral position Pc is produced, such that the width of movement is minimal. No further nodal force (electromagnetic force) is produced, therefore, even with a constant level of current, and power is wastefully consumed. Such wasteful power consumption can be minimized if the driving controller applies a pulse or impulse current.

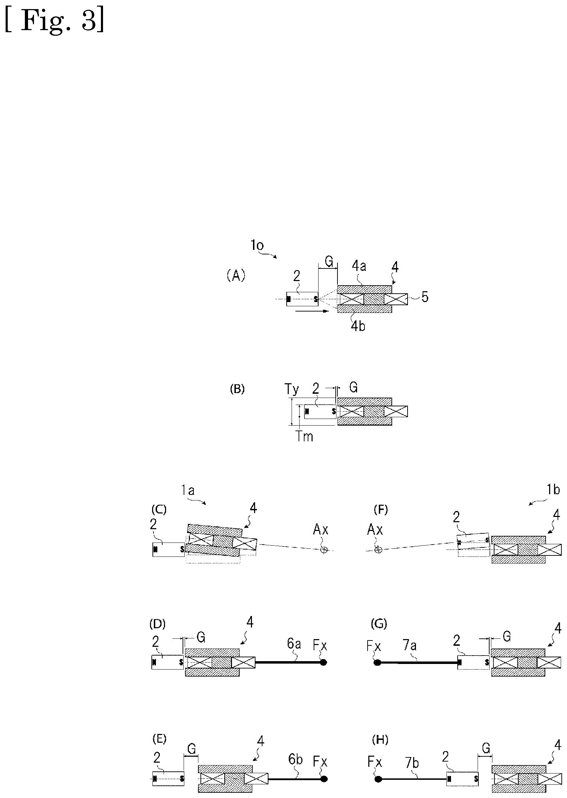

The reciprocating apparatus 1o shown in Fig. 3 (A) has nodal force which is variable by the gap G between the permanent magnet 2 and the electromagnetic yoke part 4, with a narrower gap G increasing the nodal force in the Y-axial direction.

In the reciprocating apparatus 1o shown in Fig. 3(B), however, the thickness Tm of the permanent magnet 2 is smaller than the thickness Ty of the electromagnetic yoke part 4, and a narrower gap G causes either the first electromagnetic yoke 4a or the second electromagnetic yoke 4b to be drawn toward the magnetic pole surface of the permanent magnet 2 (see Fig. 3(C)), in which case even application of current to the coil 5 in such a state cannot be expected to produce the desired oscillation.

The prior art attempts to overcome this problem in the manner illustrated in Fig. 3(D) and Fig. 3(E), by supporting the electromagnetic yoke part 4 serving as the mover in a pressed manner using elastic supports 6a, 6b with an elastic property, such as springs, one end being anchored to an elastic support anchoring point Fx, while narrowing the gap G to increase the nodal force, in which case it is necessary to provide support with a spring or other elastic solid that has a high elastic modulus, as in the elastic support 6a of Fig. 3(D), but the elastic solid with a high elastic modulus consumes a portion of the increased nodal force.

Conversely, when the gap G is widened as with the elastic support 6b shown in Fig. 3(E), an elastic solid with a low elastic modulus may be used so that loss of nodal force is minimized, but in this case the nodal force produced is itself decreased. As described above, even if the same current is applied to the electromagnetic yoke part 4, the gap G and the elastic modulus of the elastic solid are in a trade-off relationship with the nodal force that is produced.

This is also the case with the reciprocating apparatus 1b having a movable permanent magnet side 2 (see Fig. 3 (F)), wherein,
when the thickness Tm of the permanent magnet 2 is less than the thickness Ty of the electromagnetic yoke part 4, the permanent magnet 2 is drawn to either the first electromagnetic yoke 4a or the second electromagnetic yoke 4b, and therefore if the permanent magnet 2 is supported in a pressed manner using elastic supports with an elastic property, such as springs, while narrowing the gap G to increase the nodal force, as shown in Fig. 3 (G) and Fig. 3 (H) it becomes necessary to provide support with a spring or other elastic solid that has a high elastic modulus, as in the elastic support 7a of Fig. 3 (G) ; however, the elastic solid with a high elastic modulus consumes a portion of the increased nodal force.

Conversely, when the gap G is widened as with the elastic support 7b shown in Fig. 3(H), an elastic solid with a low elastic modulus may be used so that loss of nodal force is minimized, but in this case the nodal force produced is itself decreased. As described above, even if the same current is applied to the electromagnetic yoke part 3, the gap G and the elastic modulus of the elastic solid are in a trade-off relationship with the nodal force that is produced.

The present inventor has carried out repeated simulations by the finite element method, using a reciprocating apparatus model comprising only a permanent magnet 20 and an electromagnetic yoke part 30a (a reciprocating apparatus model without an electromagnetic yoke part 30b), with the goal of obtaining greater nodal force.

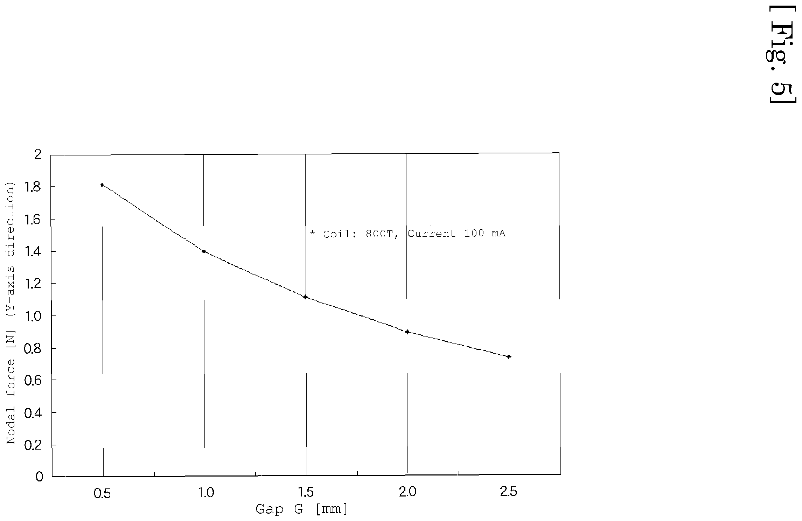

Fig. 5 shows an example of the results of a simulation using a reciprocating apparatus model, where the abscissa represents the gap G [mm] and the ordinate represents nodal force [N]. As the simulation conditions, the thickness Tm of the permanent magnet 20 was 10 mm, the width in the direction of magnetization was 5 mm, the thickness Ty of the electromagnetic yoke part 30a was 4.8 mm, the number of turns of the coil 32 was 800T, and the current size applied to the coil 32 was 100 mA. The permanent magnet 20 had performance similar to a NEOMAX-42 (NEOMAX: registered trademark) neodymium magnet by Hitachi Metals, Ltd. The material for the magnetic core 35 and the electromagnetic yokes 342a, 342b was SS400 steel.

Based on the simulation results, it was revealed that as long as the thickness Tm of the permanent magnet 20 is equal to or greater than the thickness Ty of the electromagnetic yoke part 30a, the electromagnetic yoke part 30a is not unevenly drawn to the magnetic pole surface 202 of the permanent magnet 20 even without rectification using a spring or the like, and therefore the gap G is maximally narrowed, with a greater amount of narrowing of the gap G clearly resulting in increased nodal force in the Y-axial direction at the start point, even with the same driving current.

With this reciprocating apparatus 10, therefore, it is possible to generate high-energy oscillation even with a small size.

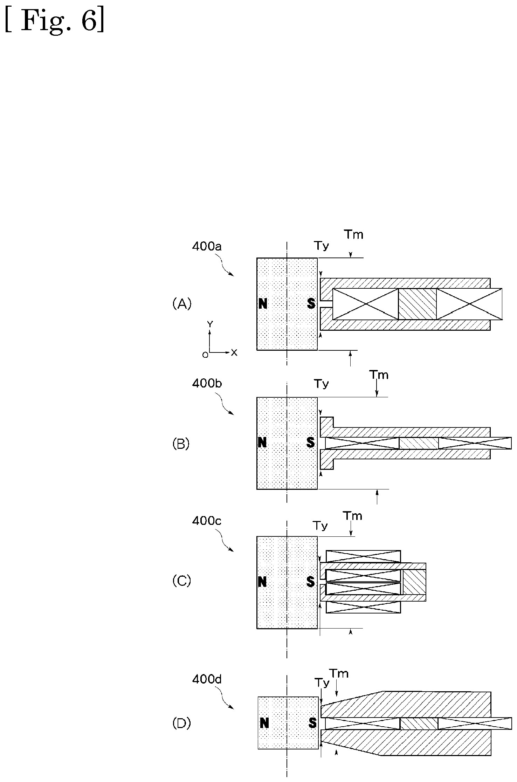

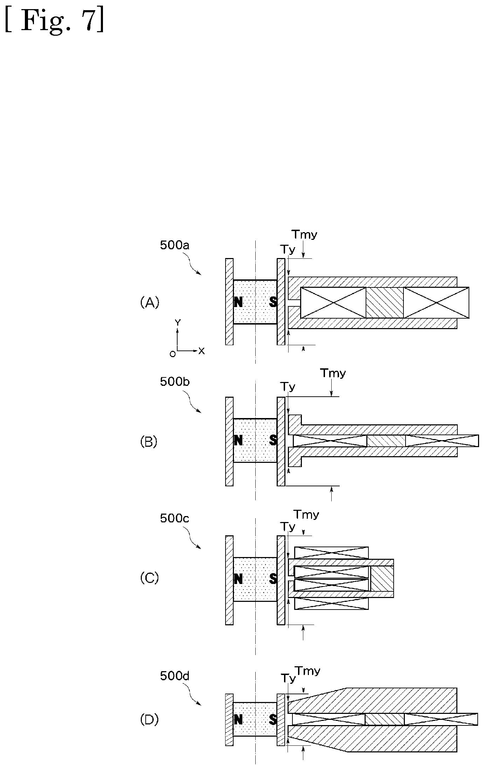

The reciprocating apparatuses 400a to 400d respectively shown in Fig. 6(A) to (D) and the reciprocating apparatuses 500a to 500d respectively shown in Fig. 7(A) to (D) are modified examples of the reciprocating apparatus 10.

The reciprocating apparatuses 400a to 400d differ in the thicknesses of the permanent magnets or the shapes of the electromagnetic yoke parts.

The reciprocating apparatuses 500a to 500d differ in the Y-directional thicknesses of the yokes provided on both magnetic pole surfaces of the permanent magnet and forming the magnetic circuit, and in the shapes of the electromagnetic yoke parts.

Parts of the two electromagnetic yoke magnetic pole surfaces facing the dimension Tm or dimension Tmy of the magnetic pole surface of the permanent magnet may also be beveled so that the dimension Ty is smaller than dimension Tm or dimension Tmy, as shown in Fig. 6(D) and Fig. 7(D).

### [Second embodiment]

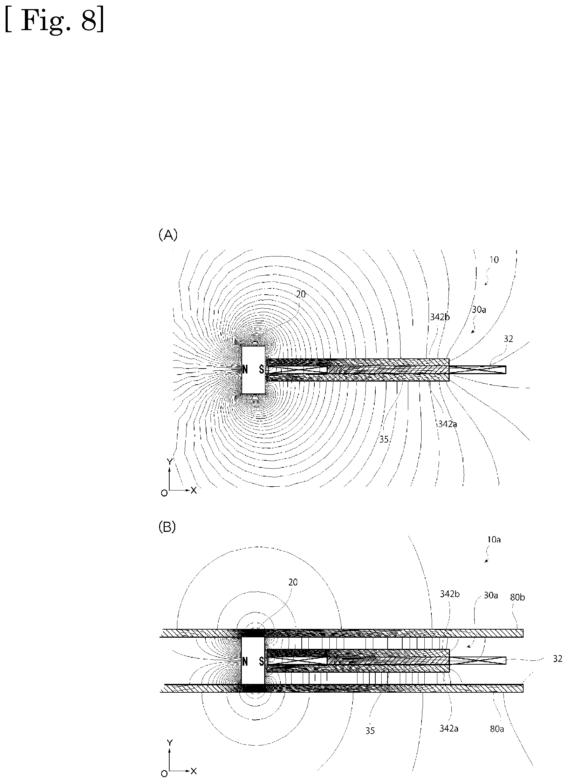

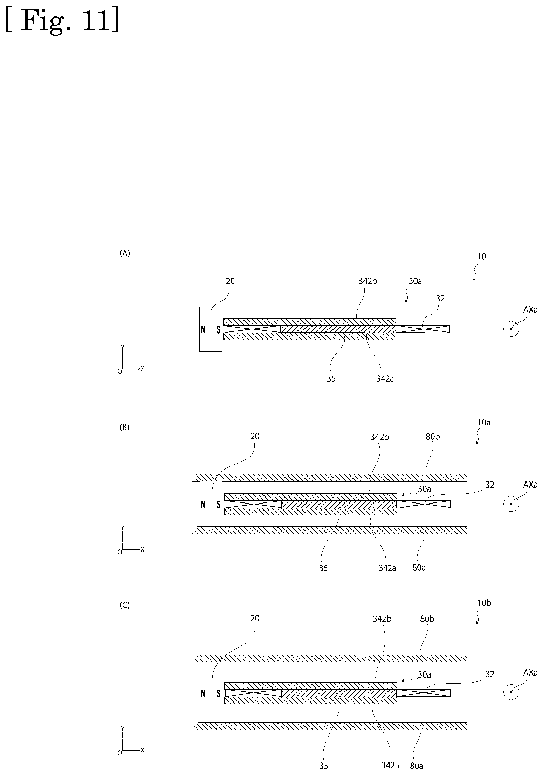

A reciprocating apparatus 10a according to the second embodiment of the present invention will now be described (with reference to Fig. 8(B) and Fig. 11(B)). The constituent elements that are identical to those of the reciprocating apparatus 10 of the first embodiment (see Fig. 11(A)) are indicated by like reference symbols and will not be described in detail again.

The reciprocating apparatus 10a may also comprise an electromagnetic yoke part 30b disposed on the side opposite the electromagnetic yoke part 30a and sandwiching the permanent magnet 20, similar to the reciprocating apparatus 10 of the first embodiment.

The reciprocating apparatus 10a further comprises a pair of magnetic body plates (example of a magnetic body) 80a, 80b sandwiching the permanent magnet 20, unlike the reciprocating apparatus 10.

The pair of magnetic body plates 80a, 80b are each plate-like magnetic bodies made of 1.6 mm-thick SS400 steel, for example. Each of the magnetic body plates 80a, 80b has its thickness direction as the Y-axial direction (direction Y), which is perpendicular to the magnetic pole direction of the permanent magnet 20.

The electromagnetic yoke part 30a is disposed between the pair of magnetic body plates 80a, 80b.

Since the reciprocating apparatus 10a comprises the pair of magnetic body plates 80a, 80b sandwiching the permanent magnet 20, external leakage of the strong magnetic force of the permanent magnet 20 is greatly reduced compared to the reciprocating apparatus 10 of the first embodiment shown in Fig. 8(A).

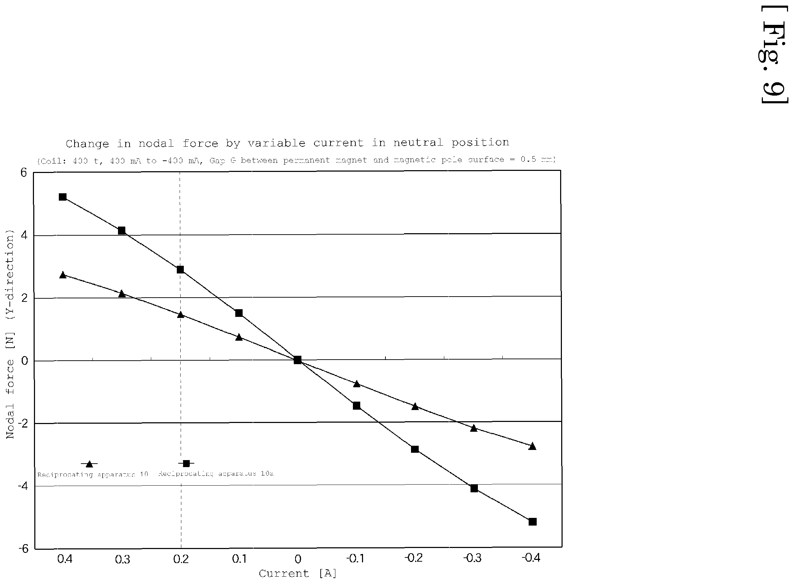

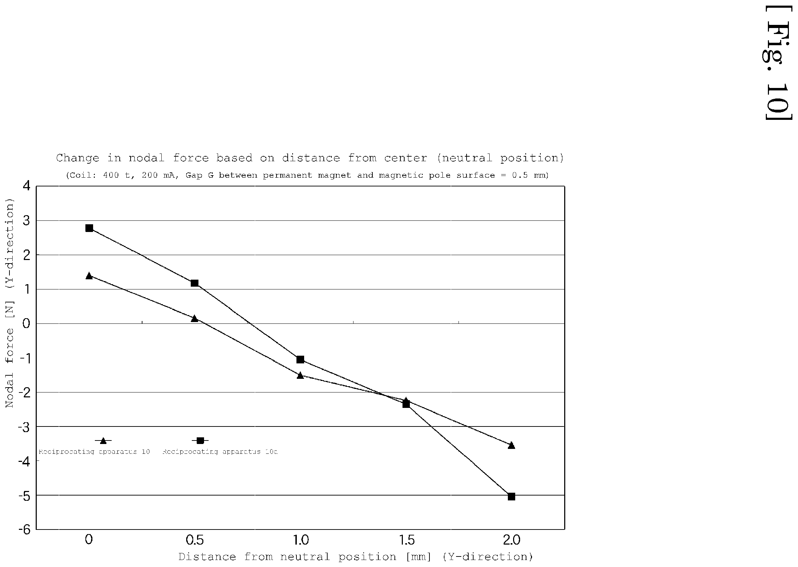

Fig. 9 is a graph showing the relationship between distance [mm] of the electromagnetic yoke part 30a from the neutral position Pc (see Fig. 4(A)) and nodal force [N] generated by the electromagnetic yoke part, for the reciprocating apparatus 10a and the reciprocating apparatus 10 of the first embodiment. As shown in Fig. 10, the nodal force generated by the electromagnetic yoke part 30a of the reciprocating apparatus 10a was about two times greater than the reciprocating apparatus 10 over the entire moving range, for a current of 200 mA. However, while the nodal force significantly decreased in a rapid manner with further movement, the power generated was still greater with the reciprocating apparatus 10a of this embodiment, and the distance at which the nodal force was zero was also longer with the reciprocating apparatus 10a, compared to the reciprocating apparatus 10 of the first embodiment.

In other words, the reciprocating apparatus 10a was able to yield greater oscillation than the reciprocating apparatus 10 even with the same current, while external leakage of the powerful magnetic lines of force of the permanent magnet 20 was also reduced.

Incidentally, a higher magnetic shielding effect is obtained when placing the magnetic body plates 80a, 80b across air, a vacuum or a non-magnetic body, without contacting the permanent magnet 20, as in the reciprocating apparatus 10b shown in Fig. 11(C).

### [Third embodiment]

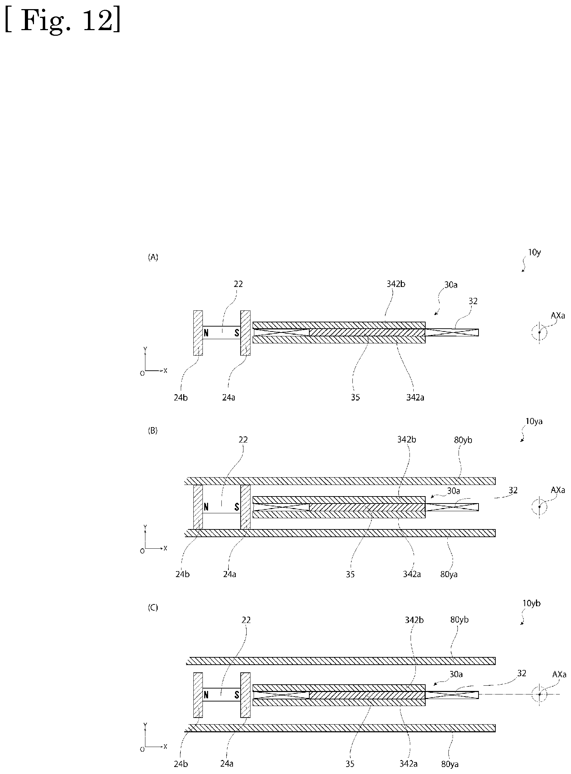

A reciprocating apparatus 10ya according to the third embodiment of the present invention will now be described (with reference to Fig. 12(B)). The constituent elements that are identical to those of the reciprocating apparatus 10y shown in Fig. 2 (A), (B), Fig. 4 (B) and Fig. 12(A) are indicated by like reference symbols and will not be described in detail again.

The reciprocating apparatus 10b may also comprise an electromagnetic yoke part 30b disposed on the side opposite the electromagnetic yoke part 30a and sandwiching the permanent magnet 22, similar to the reciprocating apparatuses 10, 10y of the first embodiment.

The reciprocating apparatus 10ya further comprises a pair of magnetic body plates (example of a magnetic body) 80ya, 80yb sandwiching the permanent magnet 22, unlike the reciprocating apparatus 10y.

The pair of magnetic body plates 80ya, 80yb are each plate-like magnetic bodies made of 1.6 mm-thick SS400 steel, for example. Each of the magnetic body plates 80ya, 80yb has its thickness direction as the Y-axial direction (direction Y), which is perpendicular to the magnetic pole direction of the permanent magnet 22.

The electromagnetic yoke part 30a is disposed between the pair of magnetic body plates 80ya, 80yb.

Since the reciprocating apparatus 10ya thus comprises the pair of magnetic body plates 80ya, 80yb sandwiching the permanent magnet 22, external leakage of the strong magnetic force of the permanent magnet 22 is greatly reduced compared to the reciprocating apparatus 10y shown in Fig. 12(A).

Incidentally, a higher magnetic shielding effect is obtained when placing the magnetic body plates 80ya, 80yb across air, a vacuum or a non-magnetic body, without contacting the permanent magnet 22, as in the reciprocating apparatus 10yb shown in Fig. 12(C).

Embodiments of the present invention have been described above, but the present invention is not limited to these embodiments, and modifications of any conditions that are not outside of the gist thereof also fall within the scope of application of the present invention.

The reciprocating apparatuses of the embodiments described above have the stator on the permanent magnet part side and the mover on the coil side, but this may be reversed, with the stator on the coil side and the mover on the permanent magnet part side. In other words, it is sufficient if the electromagnetic yoke part is capable of reciprocal movement relative to the permanent magnet part.

In addition, the electromagnetic yoke parts 30a, 30b here undergo rotational reciprocal movement with the neutral position Pc as the center, but the reciprocal movement may instead be in the Y-axial direction (translational movement).

There are no limitations on the uses of the reciprocating apparatuses described for the embodiments. The reciprocating apparatuses may be applied as drive units for driving of vibration sensors, massage devices, shakers, pumps, or tail fin members of so-called fish robots used to simulate fish, for example.

### Reference Signs List

- 1a, 1b, 1o: Reciprocating apparatus
- 2: Permanent magnet
- 4: Electromagnetic yoke part
- 4a: First electromagnetic yoke
- 4b: Second electromagnetic yoke
- 5: Coil
- 6a, 6b: Elastic support
- 7a, 7b: Elastic support
- 10, 10a, 10b, 10y, 10ya, 10yb: Reciprocating apparatus
- 20, 22: Permanent magnet
- 24a, 24b: Yoke
- 30a, 30b: Electromagnetic yoke part
- 32, 32b: Coil
- 34, 34b: Electromagnetic yoke
- 35: Magnetic core
- 80a, 80b, 80ya, 80yb: Magnetic body plate
- 202, 202y: Magnetic pole surface
- 342a: First electromagnetic yoke
- 342b: Second electromagnetic yoke
- 343a, 343b: Magnetic pole surface
- 400a-400d: Reciprocating apparatus
- 500a-500d: Reciprocating apparatus
- Axa, Axb: Rotation axis
- Fx: Elastic support anchoring point

## Claims

1. A reciprocating apparatus comprising a permanent magnet,
with an electromagnetic yoke part, the two magnetic pole surfaces of which are disposed facing each other without being in contact with at least one of the magnetic pole surfaces of the permanent magnet, and which forms a magnetic circuit by means of an electromagnetic yoke together with one or more coils having a magnetic core,
wherein:
either of the permanent magnet and the electromagnetic yoke part is a mover while the other is a stator, and
the dimension Tm of the one magnetic pole surface of the permanent magnet in the moving direction of the mover is equal to or greater than the dimension Ty of the two magnetic pole surfaces that include the gap sandwiched between the opposing two magnetic pole surfaces of the electromagnetic yoke part, in the moving direction.

2. The reciprocating apparatus according to claim 1,
which further comprises a pair of magnetic bodies sandwiching the permanent magnet in a direction Y, the direction Y which is perpendicular to the magnetic pole direction of the permanent magnet being the thickness direction,
with the electromagnetic yoke part disposed between the pair of magnetic bodies.

3. A reciprocating apparatus comprising a permanent magnet part with a yoke forming a magnetic circuit together with a permanent magnet,
the two magnetic pole surfaces of an electromagnetic yoke part are disposed facing each other without being in contact with at least one of the magnetic pole surfaces of the permanent magnet part, the electromagnetic yoke part forming a magnetic circuit by means of an electromagnetic yoke together with one or more coils having a magnetic core,
wherein:
either of the permanent magnet part and the electromagnetic yoke part is a mover while the other is a stator, and
the dimension Tmy of the one magnetic pole surface of the permanent magnet part in the moving direction is equal to or greater than the dimension Ty of the two magnetic pole surfaces that include the gap sandwiched between the opposing two magnetic pole surfaces of the electromagnetic yoke part, in the moving direction, and
the reciprocating apparatus further comprises a pair of magnetic bodies sandwiching the permanent magnet part in a direction Y, the direction Y which is perpendicular to the magnetic pole direction of the permanent magnet part being the thickness direction,
with the electromagnetic yoke part disposed between the pair of magnetic bodies.

4. The reciprocating apparatus according to claim 2 or 3, wherein:
the mover undergoes rotational reciprocal movement around a rotation axis extending in the direction perpendicular to the magnetic pole direction produced by the permanent magnet and the direction Y.

5. The reciprocating apparatus according to claim 2 or 3, wherein:
the mover undergoes reciprocal movement in the direction Y.

6. A reciprocating apparatus which comprises:
a permanent magnet part with a yoke forming a magnetic circuit together with a permanent magnet, and
an electromagnetic yoke part disposed on the side opposite the permanent magnet, sandwiching the yoke, and forming a magnetic circuit by means of an electromagnetic yoke, together with one or more coils having a magnetic core,
the two magnetic pole surfaces of the electromagnetic yoke part being disposed facing each other without being in contact with the magnetic pole surface of the yoke, wherein:
either of the permanent magnet part and the electromagnetic yoke part is a mover while the other is a stator, and
the dimension Tmy of the one magnetic pole surface of the permanent magnet part in the moving direction is equal to or greater than the dimension Ty of the two magnetic pole surfaces that include the gap sandwiched between the opposing two magnetic pole surfaces of the electromagnetic yoke part, in the moving direction.
